# EUROPEAN PATENT SPECIFICATION

(11) **EP 1 733 099 B1**
(45) Date of publication and mention of the grant of the patent: **13.08.2008**
(21) Application number: 05710894.6
(22) Date of filing: 17.02.2005
(51) Int. Cl.: E03F 1/00, C02F 1/72, E03F 7/00

(54) **METHOD OF OPERATING A SEWAGE SYSTEM**
VERFAHREN ZUM BETREIBEN EINES ABWASSERSYSTEMS
PROCEDE PERMETTANT D'ACTIVER UN SYSTEME D'EGOUTS

(30) Priority: 01.03.2004 NL 1025606
(43) Date of publication of application: 20.12.2006
(73) Proprietor: Intelligent Environmental Systems B.V., 1822 CD Alkmaar (NL)
(72) Inventor: VAN BAAR, Jacobus, Eldert, Maria, NL-1862 VD Bergen (NL)
(74) Representative: Metman, Karel Johannes
(86) International application number: PCT/NL2005/000113
(87) International publication number: WO 2005/083190

(56) References cited:
- EP-A- 0 719 732
- CH-A- 611 368
- DE-A1- 2 400 602
- DE-A1- 2 629 301
- DE-A1- 3 520 359
- DE-U1- 20 208 446
- FR-A- 2 794 482
- US-A- 4 196 074
- PATENT ABSTRACTS OF JAPAN vol. 017, no. 282 (M-1420), 31 May 1993 (1993-05-31) -& JP 05 009972 A (KUBOTA CORP), 19 January 1993 (1993-01-19)
- PATENT ABSTRACTS OF JAPAN vol. 2000, no. 25, 12 April 2001 (2001-04-12) -& JP 2001 219183 A (TOSHIBA CORP), 14 August 2001 (2001-08-14)

## Description

The present invention relates to a method of operating a sewage system in accordance with the preamble of claim 1. In addition to the use of so-called free-fall sewage systems for long-range transport of waste water, use is generally made of sewage systems in which the waste water is transported to the sewage system under pressure by means of sewage pumps, such as plunger pumps disposed in catch pits.

One feature of these systems is that the waste water only moves in the pressure pipe system when a sewage pump is running. A problem that occurs in this connection is the fact that the waste water to be discharged remains in the sewage system for a prolonged period of time, which may lead to a low oxygen content of the waste water.

These circumstances lead to bacteriological processes by which H₂S is formed in the sewage water in the case of prolonged residence times.

Said bacteriological processes and the formation of H₂S may have the following consequences:
● Odour nuisance at the discharge point;
● Damage to sewer lines and pumping-stations in the sewage system:
   o Accelerated depreciation of the sewage systems;
   o Pollution of the soil and groundwater due to leakages;
   o Increased usage of materials and, as a result:
      ■ Increased energy consumption for exchanging the damaged materials;
      ■ Increased waste flow;
● The purification efficiency of the waste water purification plant may be adversely affected by the low-oxygen water;
● Public health hazard, H₂S is highly toxic.

The development of the bacteriological process may take place in the following manner. The temperature of the air in the discharge pit directly above the waste water is higher than the temperature close to the concrete wall (influence of the surrounding ground). As a result, a condensation layer is formed on the concrete wall above the water surface, in which the bacteria may occur that live on the energy that is released in the course of the production of sulphuric acid. Said bacteria use sulphur as an energy source, and produce the sulphuric acid. The fact is that in the presence of oxygen in the atmosphere of the discharge pit and free-fall sewers located downstream thereof, hydrogen sulphide gas is not stable and is converted into sulphur. Free form sulphur is also found in decayed concrete, therefore. Various types of bacteria successively develop in the layer of condensation on the concrete wall, which bacteria produce increasingly higher concentrations of sulphuric acid. The final phase in the formation of sulphuric acid is controlled by the so-called "concrete eater". This is a type of bacterium that grows optimally in an environment in which the degree of acidity is very high.

As the degree of acidity increases, the cohesion of the cement-bound material is eventually lost. The various corrosion products may remain behind on the concrete surface in the form of a (white) crust of gypsum and hydroxides of aluminium and iron. Said layer can be recognized by its reddish brown colour at very low concentrations already. The "washed-out gravel" effect and the disintegration of the outer layer of concrete form part of the overall image of concrete decay.

A method according to the preamble of claim 1 is known from DE 26 29 301 A1. This document discloses a sewage system and method in which an air compressor 33 is introducing compressed air into the waste water in a dosed and controlled fashion in dependence of measuring values of a sewage flow measuring means 37.

The object of the present invention is to provide a novel method of operating a sewage system

To that end, the method according to the invention comprises the aspects defined in the characterising portion of claim 1.

According to the invention, the oxygen content of the waste water can be maintained at the required level by using means whose energy consumption can be low on account of the fact that they are used periodically at regular intervals.

According to the invention it is preferred that the air is added at a location as far away from a discharge point of the sewage system as possible.

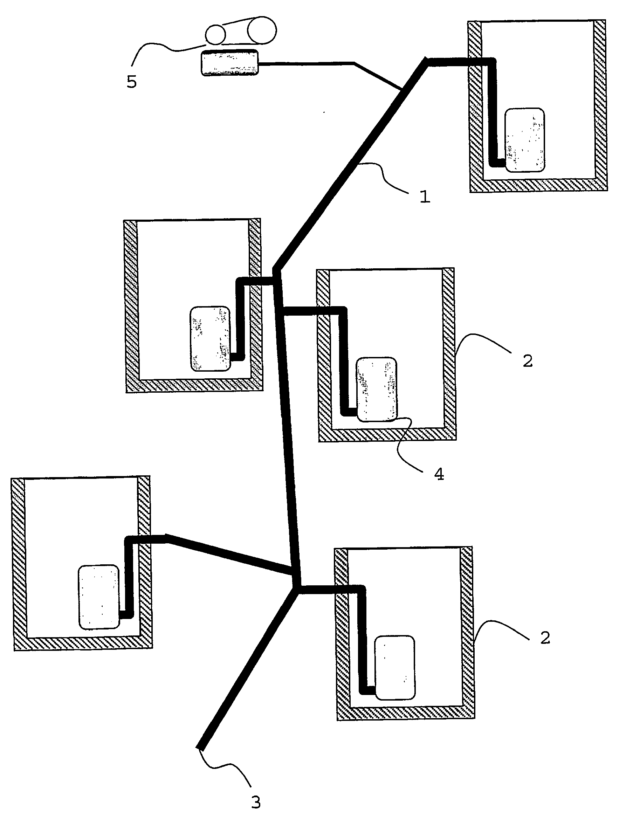

The invention will be explained in more detail hereinafter with reference to the drawing, which shows an embodiment of the invention.

The only figure of the drawing is a very schematic representation of a sewage system for applying the method according to the invention.

The drawing very schematically shows a closed sewage system comprising a sewage pipe 1, a number of pits 2 and a discharge point 3. A plunger pump 4 is installed in each of the pits 2, which pump discharges the waste water being collected in the pit as required (a few times a day) by having the pumps run at great intervals so as to forcefully drain the entire sewage pipe.

According to the invention oxygen in the form of air, is artificially introduced into the sewage pipe 1 at regular intervals so as to prevent bacteriological processes from developing. In this way the waste water is prevented from becoming poor in oxygen, which might give rise to the formation of the harmful H₂S. Said oxygen is introduced by means of an air pump or air compressor 5 or the like. For example, a number of 4-20 air compressors may be provided for every 100 sewage pumps, preferably in the pump pits or in separate pits. Said compressors can blow air into the downstream pressure line of the sewage pumps below the surface of the waste water for some time, for example 0.5 - 1 minute, with a frequency of once every 5 minutes to once an hour. The compressors may have a capacity of a few m³ per hour. Since the air cannot escape from the closed system, it will be absorbed in the waste water and thus continue to contain sufficient oxygen for preventing anaerobic bacteriological processes from developing. The sewage pipe will be partially drained as a result of air are being forced therein. The operation of the compressors (capacity, blowing frequency and blowing amount, etc) will be selected in dependence on the system parameters of the sewage system in question so as to obtain the best possible results. The invention is not limited to the embodiments as shown in the drawing and described in the foregoing, which can be varied in various ways within the scope of the invention as defined in the claims.

## Claims

1. A method of operating a pressure sewage system for draining waste water, whereby sewage is pumped using a sewage pump (4) when required and whereby air is added artificially and periodically by means of an air pump (5), the method being **characterized in that** the air is added at regular intervals with a frequency of once in every 5 minutes to once in an hour.

2. A method according to claim 1, wherein air is added to the sewage system at a location as far away from a discharge point as possible.

3. A method according to claim 1 or 2, wherein air is added to the sewage below the surface thereof.

## Patentansprüche

1. Verfahren zum Betreiben eines Druckabwassersystems zur Ableitung von Abwasser, wobei Abwasser falls erforderlich unter Verwendung einer Abwasserpumpe (4) gepumpt wird, und wobei künstlich und periodisch mittels einer Luftpumpe (5) Luft hinzugefügt wird, wobei das Verfahren **dadurch gekennzeichnet ist, daß** die Luft in regelmäßigen Intervallen mit einer Häufigkeit von einmal alle 5 Minuten bis einmal in einer Stunde hinzugefügt wird.

2. Verfahren nach Anspruch 1, wobei die Luft dem Abwassersystem an einer Stelle hinzugefügt wird, die soweit wie möglich von einem Einleitungspunkt entfernt ist

3. Verfahren nach Anspruch 1 oder 2, wobei die Luft dem Abwasser unter dessen Oberfläche hinzugefügt wird.

## Revendications

1. Procédé de fonctionnement d'un réseau d'égouts sous pression pour évacuer des eaux usées, dans lequel les eaux d'égout sont pompées à l'aide d'une pompe à eaux d'égout (4) lorsque cela est nécessaire et dans lequel de l'air est ajouté artificiellement et périodiquement au moyen d'une pompe à air (5), le procédé étant **caractérisé en ce que** l'air est ajouté à des intervalles réguliers avec une fréquence allant d'une fois toutes les cinq minutes à une fois par heure.

2. Procédé selon la revendication 1, dans lequel l'air est ajouté dans le réseau d'égouts dans un emplacement aussi éloigné d'un point de rejet que possible.

3. Procédé selon la revendication 1 ou 2, dans lequel l'air est ajouté dans l'égout en dessous de la surface de celui-ci.
